# EUROPEAN PATENT APPLICATION

(11) **EP 2 423 784 A2**
(43) Date of publication of application: **29.02.2012**
(21) Application number: 11178218.1
(22) Date of filing: 22.08.2011
(51) Int. Cl.: G06F 3/00

(54) **Touch table structure**

(30) Priority: 24.08.2010 TW 099216290
(71) Applicant: Nlighten Trading (Shanghai) Co., Ltd., Shanghai 200233 (CN)
(72) Inventor: Wu, Xin-Min, Shanghai (CN); Li, Jian-Guo, Shanghai (CN); Tang, Wei, Shanghai (CN); Shen, Hong, Shanghai (CN); Guo, Qing, Shanghai (CN)
(74) Representative: Zaboliene, Reda

(57) **Abstract**

A touch table structure is disclosed. The touch table structure includes a touch tabletop; and a table body disposed below the touch tabletop, the table body including a plurality of side plates disposed on a plurality of side surfaces of the table body, and at least one sliding door disposed on at least one side surface of the table body. The touch tabletop can be prevented from dust and water and therefore can be used in restaurants, pubs, etc. The computer disposed in the touch table structure can be taken out or be exposed out by opening the sliding door, such that the users can change the hardware in the computer according to their demand or use the optical disk drive or the connection port in the exposed computer to install application software freely. The computer can be disposed in the receiving space of the touch table structure in one side, and various small items can be disposed in the receiving space of the touch table structure in the other side.

## Description

### FIELD OF THE INVENTION

The present invention relates to touch technology, and more particularly to a touch table structure.

### BACKGROUND OF THE INVENTION

Recently, touch screen technology has developed rapidly. Various single touch or multi touch screens, for example resistive touch screen, capacitive touch screen, optical touch screen, electromagnetic touch screen and surface acoustic wave touch screen, have been generated to replace traditional input devices for example a keyboard or a mouse. Touch screen introduces a brand new operating method of the computer for the consumer. The users can fully control the operations of the personal computer by utilizing their fingers only without the need of using the keyboard or the mouse respectively to input words or to control the cursor.

However, traditional touch screens are usually limited to single person usage and cannot be used or observed by multiple persons at the same time because of the size of the screen. Therefore, a tabletop having an embedded touch screen is developed to facilitate real time communication and multi-person teaching in recent years. Touch screen is a particularly fine technical product and may be damaged by outer factors, for example liquid, dust, pressure or external force. Especially, the current touch panel is usually made of fragile materials and may be crashed by external forces easily. The current tabletop having the embedded touch screen cannot achieve the functions of preventing the tabletop from water, dust, impact and pressure. Moreover, the current tabletop or the current table body having the embedded touch screen doesn't have any receiving spaces. Therefore, signal sources, for example a computer, in cooperation with the tabletop or the table body having the embedded touch screen are usually placed outside of the traditional tabletop or the table body directly, which results in the problems of inconvenience of usage and occupation of space.

Accordingly, there is still a need for a technical solution which can solve the aforementioned problems of the traditional touch screen or the tabletop or the table body having the embedded touch screen.

### SUMMARY OF THE INVENTION

To solve the aforementioned problems of the conventional technique, the present invention provides a touch table structure.

In one aspect, the present invention discloses a touch table structure, including a touch tabletop; a table body disposed below the touch tabletop, the table body including a plurality of side plates disposed on a plurality of side surfaces of the table body, at least one sliding door disposed on at least one side surface of the table body, and a bottom plate disposed on a lower surface of the table body, wherein a projector, a light source and a video and audio input and output interface are disposed on the bottom plate, the projector being electrically coupled to the video and audio input and output interface and being optically connected to the light source, the light source providing visible light and infrared light to the projector to evenly project the visible light and the infrared light toward the touch tabletop through the projector; and a plurality of rollers disposed on the lower surface of the table body.

The sliding door includes an upper door sheet, a lower door sheet and a movable bracket, and the table body further includes a plurality of division plates disposed within the table body and adjacent to the lower door sheet. The plurality of division plates form a plurality of receiving spaces respectively with the bottom plate and the lower door sheet.

One advantage of the present invention is that the touch table structure of the present invention can provide various receiving spaces with different sizes to place large items, for example the computer, or small items therein.

Another advantage of the present invention is that the touch table structure of the present invention employs the sliding door, for instance the up-sliding door, as the opening and closing design of the receiving spaces, such that the space needed when the receiving spaces are opened or closed can be saved.

Still another advantage of the present invention is that the touch table structure of the present invention renders the users to see the image formed by the visible light on the touch tabletop and meanwhile touch the touch tabletop with fingers or any similarly shaped articles, so as to perform single touch or multi touch functions.

Yet another advantage of the present invention is that the touch table structure of the present invention utilizes the video and audio input and output interface to couple with the signal sources, for example the computer, and outputs video and audio signals through the touch tabletop and the speaker, so as to display various multimedia contents.

Still another advantage of the present invention is that the touch table structure of the present invention can prevent the film within the touch tabletop from being damaged by dust, liquid, external force or pressure.

Yet another advantage of the present invention is that the computer placed in the receiving spaces of the touch table structure may be taken out of the touch table structure by opening the sliding door, such that the users can take the computer out by their own and change the hardware configuration of the computer according to their demand.

Still another advantage of the present invention is that the computer placed in the receiving spaces of the touch table structure may be exposed out by opening the sliding door, such that the users can utilize the optical disk drive or the connection port in the exposed computer to install application software freely.

Yet another advantage of the present invention is that the computer can be disposed in the receiving space of the touch table structure in one side, and various small items, for example books or cups, can be disposed in the receiving space of the touch table structure in the other side.

Still another advantage of the present invention is that the touch table structure of the present invention can be prevented from dust and water and therefore can be used in restaurants, pubs, etc because the touch tabletop thereof is made of tampered glass entirely.

These and other advantages will become apparent from the following description of preferred embodiments taken together with the accompanying drawings and the appended claims.

### BRIEF DESCRIPTION OF THE DRAWINGS

The present invention may be understood by some preferred embodiments and detailed descriptions in the specification and the attached drawings below. The identical reference numbers in the drawings refer to the same components in the present invention. However, it should be appreciated that all the preferred embodiments of the invention are only for illustrating but not for limiting the scope of the Claims and wherein:
Fig. 1 illustrates a diagram of the touch table structure in accordance with one embodiment of the present invention;
Fig. 2 illustrates a diagram of the touch tabletop of the touch table structure in accordance with one embodiment of the present invention;
Fig. 3 illustrates a perspective diagram of the touch table structure in accordance with one embodiment of the present invention;
Fig. 4 illustrates a perspective diagram of the touch table structure in accordance with one embodiment of the present invention;
Fig. 5 illustrates a diagram of the receiving spaces of the touch table structure in accordance with one embodiment of the present invention; and
Fig. 6 illustrates a diagram of the receiving spaces of the touch table structure in accordance with one embodiment of the present invention.

### DETAILED DESCRIPTION OF THE PREFERRED EMBODIMENT

The invention will now be described with the preferred embodiments and aspects and these descriptions interpret structure and procedures of the invention only for illustrating but not for limiting the Claims of the invention. Therefore, except the preferred embodiments in the specification, the present invention may also be widely used in other embodiments.

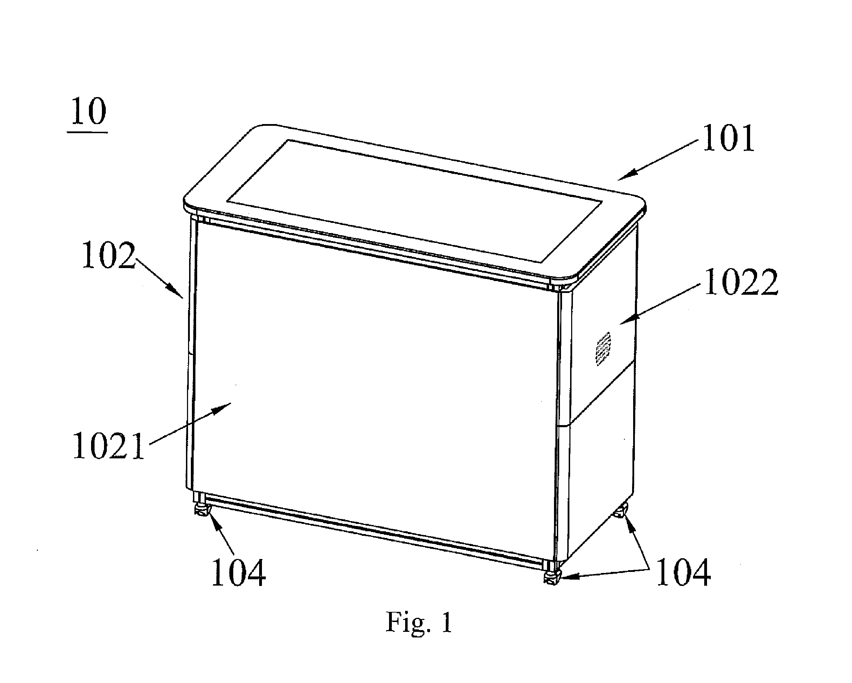

The present invention discloses a touch table structure. With reference to Fig. 1, the touch table structure 10 of the present invention includes table body 102 having a touch tabletop 101, and a plurality of, for example four, rollers 104. The touch tabletop 101 is disposed on the table body 102 while the rollers 104 are disposed in the four corners of the lower surface of the table body 102. As shown in Fig. 1, the table body 102 includes a plurality of, for example two, side plates 1021 and at least one, for example two, sliding doors. The plurality of side plates 1021 are disposed on a plurality of side surfaces of the table body 102 while the at least one sliding door is disposed on at least one side surface of the table body 102. In one embodiment, the sliding door may be an up-sliding door 1022. As shown in Fig. 1, in one embodiment, the side plates 1021 are disposed on two opposite side surfaces of the table body 102 while the up-sliding doors 1022 can be disposed on the other two opposite side surfaces of the table body 102.

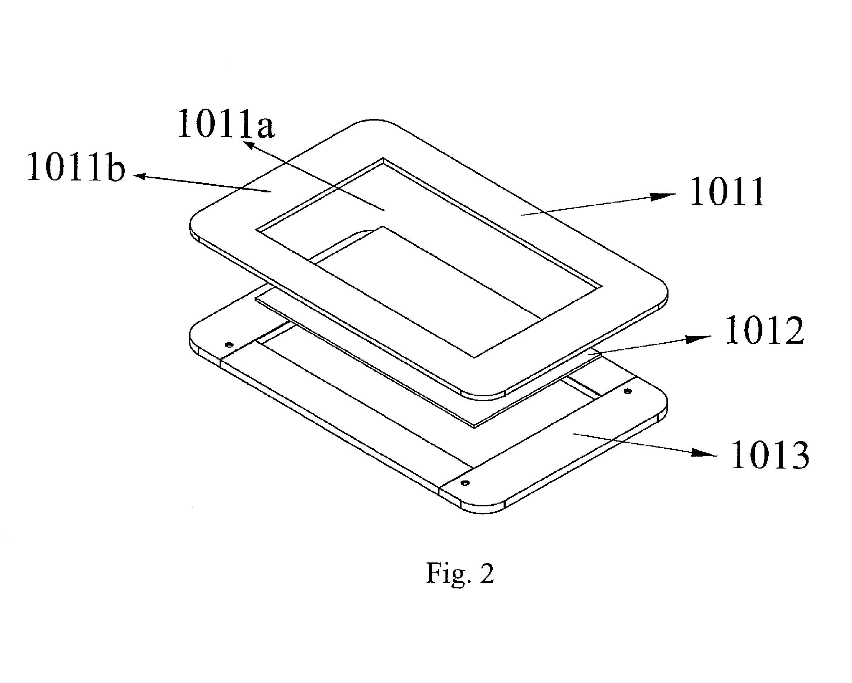

In one embodiment of the present invention, as shown in Fig. 2, the touch tabletop 101 is formed by a tampered glass 1011, a film 1012 and a supporting frame 1013. The tampered glass 1011 includes an displaying portion 1011 a and a non-displaying portion 1011b. The displaying portion 1011a is transparent, and the non-displaying portion 1011b may be transparent or nontransparent. The film 1012 may be a diffuser film having light-evening properties. The film 1012 is adhered below the displaying portion 1011 a of the tampered glass 1011 to form a projection screen so as to even the visible light and the infrared light projected by the projector (which will be described hereinafter) while the supporting frame 1013 is adhered below the non-displaying portion 1011b of the tampered glass 1011 to support the tampered glass 1011. In one embodiment, the tampered glass 1011 is monolithic and has no gaps or holes, such that the film 1012 can be prevented from damage of dust, liquid, external forces or pressure.

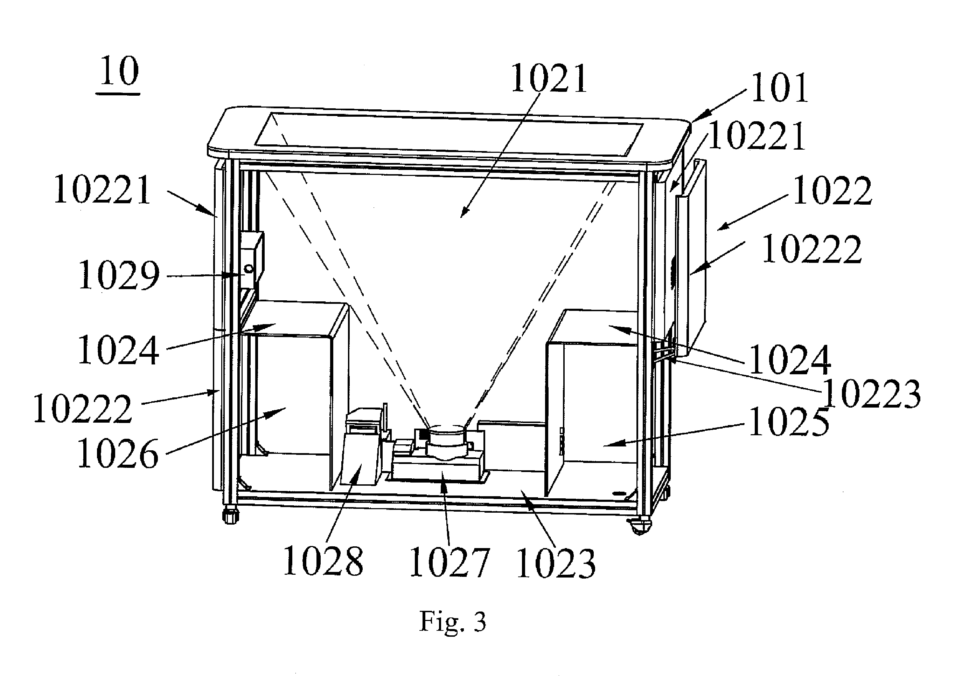

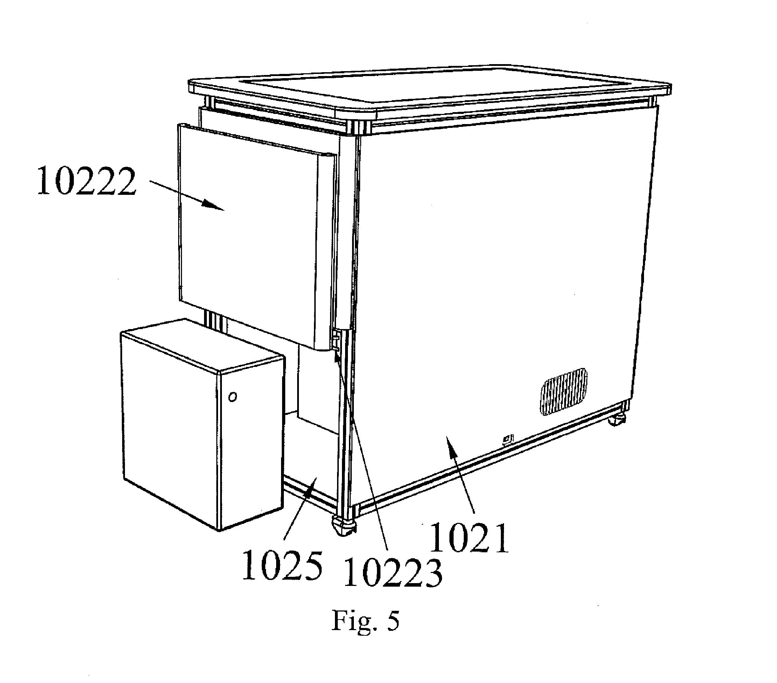

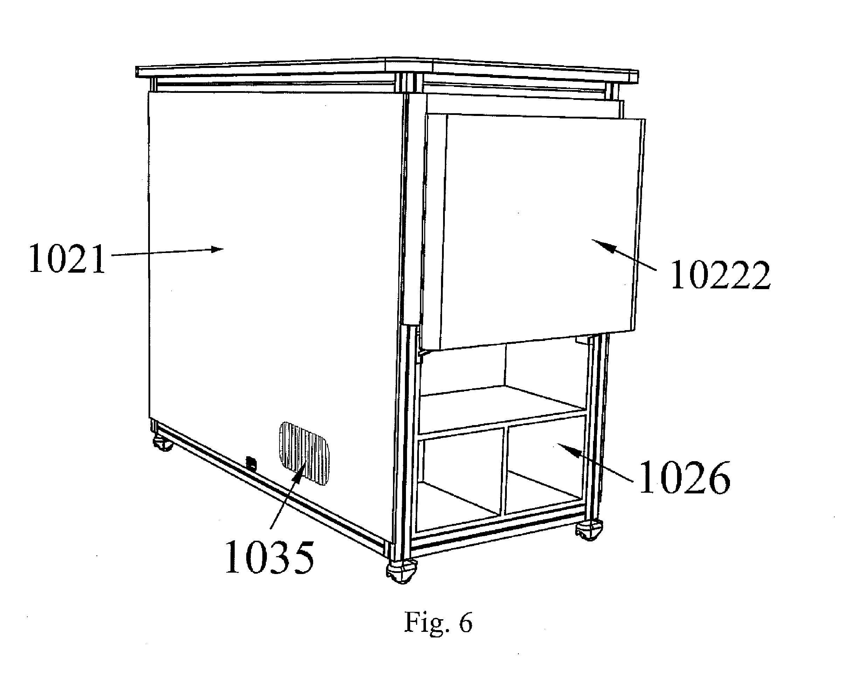

With reference to Fig. 3, the up-sliding door 1022 includes an upper door sheet 10221, a lower door sheet 10222 and a movable bracket 10223. The upper door sheet 10221 is fixed, and the lower edge of the lower door sheet 10222 is connected to one end of the movable bracket 10223, thereby the lower door sheet 10222 can move between an open position as shown in Fig. 3 and a close position as shown in Fig. 1 through the movable bracket 10223. As shown in Fig. 3, the table body 102 further includes a bottom plate 1023 disposed on the lower surface of the table body 102 and a plurality of, for example two, division plates 1024 disposed within the table body 102 and adjacent to the lower door sheet 10222 of the up-sliding door 1022. In one embodiment, the plurality of, for example two, division plates 1024 form a plurality of receiving spaces, for example a first receiving space 1025 and a second receiving space 1026, respectively with the bottom plates 1023 and the lower door sheet 10222 to place items. In one embodiment, the first receiving space 1025 and the second receiving space 1026 can be disposed with a plurality of compartments, for example a plurality of wooden compartments or metal compartments. The metal compartments may be iron-made compartments or stainless steel made compartments. As shown in Fig. 5, in one embodiment, the first receiving space 1025 may be utilized to place a computer. As shown in Fig. 6, in one embodiment, the second receiving space 1026 may be disposed with three compartments to place small items, for example books, keyboards, a mouse or cups.

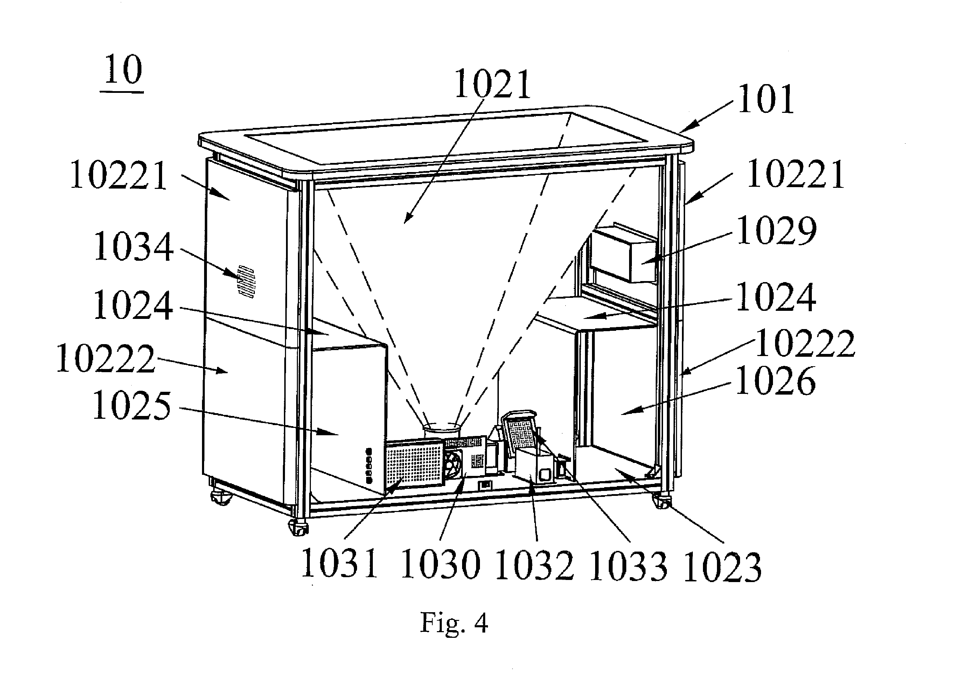

As shown in Figs. 3 and 4, a projector 1027, an air tube 1028, a fan 1030, a video and audio input and output interface 1031, a power supply 1032 and a light source 1033 are disposed on the bottom plates 1023 while a speaker 1029 is disposed on the inner side of the upper door sheet 10221. The projector 1027 is electrically coupled to the video and audio input and output interface 1031 and the power supply 1032 and is optically connected to the light source 1033 while the power supply 1032 is electrically coupled to the projector 1027, the speaker 1029, the fan 1030, the video and audio input and output interface 1031 and the light source 1033. The video and audio input and output interface 1031 is electrically coupled to the projector 1027, the speaker 1029 and the power supply 1032.

The light source 1033 provides visible light and infrared light to the projector 1027 to evenly project the visible light and the infrared light towards the touch tabletop 101 through the projector 1027. Therefore, when the user touches the touch tabletop 101 with fingers or any similarly shaped articles, the infrared light projected by the projector 1027 may be reflected by the fingers or the articles and the reflected infrared light may be then detected by an infrared camera (not shown) in cooperation with a positioning module (not shown), so as to achieve the single touch or multi touch functions. The air tube 1028 and the fan 1030 are utilized to ventilate the table body and carry the heat generated by the projector 1027, the video and audio input and output interface 1031 and the light source 1033 out to enhance heat dissipation effect.

The video and audio input and output interface 1031 is employed to receive video and audio signals from signal sources, for example the computer, and transmit the video and audio signals to the projector 1027 and the speaker 1029. As shown in Fig. 4, the video and audio input and output interface 1031 has several video and audio input and output terminals embedded in the division plate 1024 to couple with the signal sources, for example the computer, through the video and audio input and output terminals. The power supply 1032 is utilized to provide electric power to the projector 1027, the speaker 1029, the fan 1030, the video and audio input and output interface 1031 and the light source 1033. As shown in Fig. 4, a plurality of through holes 1034, for example horizontal through holes, are disposed in the upper door sheet 10221 and are aligned with the positions of the speakers 1029 to transmit the sound generated by the speakers 1029 outwards. As shown in Fig. 6, a plurality of through holes 1035, for example vertical through holes, are disposed in one side plate 1021 and are aligned with the position of the fan 1030 to discharge the hot gas sucked by the fan 1030 outwards.

As aforementioned, the touch table structure of the present invention can provide various receiving spaces with different sizes to place large items, for example the computer, or small items, for example books, cups, etc therein. Furthermore, the computer placed in the receiving spaces of the touch table structure may be taken out of the touch table structure by opening the sliding door, such that the users can take the computer out by their own and change the hardware configuration of the computer according to their demand. Moreover, the computer placed in the receiving spaces of the touch table structure may be exposed out by opening the sliding door, such that the users can utilize the optical disk drive or the connection port in the exposed computer to install application software freely. Further, the touch table structure of the present invention can be prevented from dust and water and therefore can be used in restaurants, pubs, etc because the touch tabletop thereof is made of tampered glass entirely. Moreover, the touch table structure of the present invention employs the sliding door, for instance the up-sliding door, as the opening and closing design of the receiving spaces, such that the space needed when the receiving spaces are opened or closed can be saved. Furthermore, the touch table structure projects the visible light and the infrared light onto the touch tabletop at the same time to render the users to see the image formed by the visible light on the touch tabletop and meanwhile touch the touch tabletop with fingers or any similarly shaped articles, so as to perform single touch or multi touch functions. Moreover, the touch table structure of the present invention utilizes the video and audio input and output interface to couple with the signal sources, for example the computer, and outputs video and audio signals through the touch tabletop and the speaker, so as to display various multimedia contents.

The foregoing description is a preferred embodiment of the present invention. It should be appreciated that this embodiment is described for purposes of illustration only, not for limiting, and that numerous alterations and modifications may be practiced by those skilled in the art without departing from the spirit and scope of the invention. It is intended that all such modifications and alterations are included insofar as they come within the scope of the invention as claimed or the equivalents thereof.

## Claims

1. A touch table structure, comprising:
a table body having a touch tabletop, and said table body including a plurality of side plates disposed on a plurality of side surfaces of said table body, at least one sliding door disposed on at least one side surface of said table body, and a bottom plate disposed on a lower surface of said table body, wherein a projector, a light source and a video and audio input and output interface are disposed on said bottom plate, said projector being electrically coupled to said video and audio input and output interface and being optically connected to said light source, said light source providing visible light and infrared light to said projector to evenly project said visible light and said infrared light toward said touch tabletop through said projector; and wherein said projector is aligned to said touch tabletop.

2. The structure of claim 1, wherein said sliding door comprises an up-sliding door.

3. The structure of claim 1, wherein said sliding door comprises an upper door sheet, a lower door sheet and a movable bracket.

4. The structure of claim 3, wherein said table body further comprises a plurality of division plates disposed within said table body and adjacent to said lower door sheet.

5. The structure of claim 4, wherein said plurality of division plates form a plurality of receiving spaces respectively with said bottom plate and said lower door sheet.

6. The structure of claim 5, wherein said plurality of receiving spaces are disposed with a plurality of compartments.

7. The structure of claim 6, wherein said plurality of compartments comprise wooden compartments.

8. The structure of claim 6, wherein said plurality of compartments comprise metal compartments.

9. The structure of claim 3, wherein a lower edge of said lower door sheet is connected to one end of said movable bracket.

10. The structure of claim 3, wherein said lower door sheet moves between an open position and a close position through said movable bracket.

11. The structure of claim 1, further comprising a plurality of rollers disposed on said lower surface of said table body

12. The structure of claim 1, wherein said touch tabletop comprises a supporting frame, a film and a tampered glass.
